(19) **Europäisches Patentamt / European Patent Office / Office européen des brevets**

(11) **EP 4 296 650 B1**

(12) # FASCICULE DE BREVET EUROPEEN

(45) Date de publication et mention de la délivrance du brevet:
**03.06.2026 Bulletin 2026/23**

(21) Numéro de dépôt: **23179923.0**

(22) Date de dépôt: **19.06.2023**

(51) Classification Internationale des Brevets (IPC):
**G01N 21/21** *(2006.01)* **G01J 4/04** *(2006.01)*

(52) Classification Coopérative des Brevets (CPC):
**G01J 4/04; G01N 21/21**

(54) **SYSTEME DE MESURE D'UN DEGRE DE POLARISATION LINEAIRE ESTIME D'UN RAYONNEMENT ELECTROMAGNETIQUE REFLECHI PAR UNE SCENE**

SYSTEM ZUR MESSUNG EINES LINEAREN POLARISATIONSGRADS ZUR SCHÄTZUNG EINER VON EINER SZENE REFLEKTIERTEN ELEKTROMAGNETISCHEN STRAHLUNG

SYSTEM FOR MEASURING A DEGREE OF LINEAR POLARIZATION ESTIMATED OF ELECTROMAGNETIC RADIATION REFLECTED BY A SCENE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.06.2022 FR 2206124**

(43) Date de publication de la demande:
**27.12.2023 Bulletin 2023/52**

(73) Titulaire: **Commissariat à l'Energie Atomique et aux Energies Alternatives**
**75015 Paris (FR)**

(72) Inventeur: **DENEUVILLE, François**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(56) Documents cités:
**EP-A1- 3 503 192     WO-A2-2005/029015**
**US-B2- 7 339 670**

- **WIKIPEDIA: "Battement (acoustique)", 31 October 2021 (2021-10-31), XP093273897, Retrieved from the Internet <URL:https://fr.wikipedia.org/w/index.php?title=Battement_(acoustique)&oldid=187590987>**

**Description**

La présente demande de brevet revendique la priorité de la demande de brevet français FR22/06124.

Domaine technique

La présente demande concerne le domaine des dispositifs de détermination du degré de polarisation d'un rayonnement électromagnétique.

Technique antérieure

Un rayonnement électromagnétique peut être complètement polarisé, partiellement polarisé ou complètement non polarisé. On peut décrire un rayonnement partiellement polarisé, comme la somme d'un rayonnement polarisé et d'un rayonnement complètement non polarisé. Le degré de polarisation DOP est le rapport entre la puissance du signal polarisé et la puissance totale du rayonnement électromagnétique, et correspond à un nombre variant de 0 à 1.

Un rayonnement électromagnétique polarisé peut, en tout ou en partie, perdre sa cohérence et ainsi devenir dépolarisé en se réfléchissant sur une scène selon notamment l'état de surface ou les matériaux composant les éléments de la scène. De façon analogue, un rayonnement électromagnétique non polarisé peut, en tout ou en partie, se polariser en se réfléchissant sur une scène selon notamment l'état de surface ou les matériaux composant les éléments de la scène.

Une image du degré de polarisation DOP du rayonnement réfléchi par une scène peut ainsi être utilisée pour déterminer certaines caractéristiques des éléments de la scène, notamment l'état de surface ou des propriétés des matériaux présents en surface des éléments de la scène.

Un système de détermination d'une image du degré de polarisation DOP d'un rayonnement réfléchi peut comprendre une source lumineuse émettant vers la scène un rayonnement polarisé de façon rectiligne selon une direction donnée, et un capteur du rayonnement réfléchi dont chaque pixel est recouvert d'un polariseur rectiligne.

Un inconvénient d'un tel système est qu'il nécessite l'utilisation de polariseurs rectilignes selon différentes directions, par exemple parallèle à la direction donnée, perpendiculaire à la direction donnée, inclinée de +45 ° par rapport à la direction donnée, etc. La formation de différents types de polariseurs rectilignes sur le capteur peut être complexe, d'autant plus que la tendance actuelle est à la réduction des dimensions des pixels.

Le document US7339670B2 présente un exemple de l'état de la technique.

Résumé de l'invention

Un objet d'un mode de réalisation est de prévoir un système de détermination d'une image du degré de polarisation palliant tout ou partie des inconvénients des dispositifs électroniques existants.

Un mode de réalisation prévoit un système de détermination d'un degré de polarisation estimé d'un rayonnement réfléchi par une scène selon la revendication 1.

Selon un mode de réalisation, la troisième direction est identique à la première direction.

Selon un mode de réalisation, la deuxième fréquence est le double de la première fréquence.

Selon un mode de réalisation, la première fréquence est dans la plage de 25 MHz à 100 MHz.

Selon un mode de réalisation, la deuxième direction est perpendiculaire à la première direction.

Selon un mode de réalisation, le dispositif d'acquisition ne comprend pas d'autres polariseurs rectilignes que les polariseurs rectilignes selon la troisième direction.

Selon un mode de réalisation, le dispositif d'acquisition est en outre configuré pour fournir une image de profondeur de la scène.

Selon un mode de réalisation, le dispositif d'acquisition est en outre configuré pour l'acquisition d'une image 2D de la scène et comprend des deuxièmes pixels d'image 2D.

Selon un mode de réalisation, le dispositif d'acquisition comprend un empilement d'un premier capteur comprenant les deuxièmes pixels et d'un deuxième capteur comprenant les premiers pixels.

Un mode de réalisation prévoit également un procédé de détermination d'un degré de polarisation estimé d'un rayonnement réfléchi par une scène selon la revendication 10.

Selon un mode de réalisation, la deuxième fréquence est égale au double de la première fréquence, le procédé comprenant en outre les étapes suivantes :

- l'acquisition par les premiers pixels de $N_{tap}$ échantillons $I_k$ de charges photogénérées par détection du rayonnement réfléchi pendant des durées $T_{int}$ décalées, $N_{tap}$ étant un nombre entier supérieur ou égal à cinq ;
- la détermination de coefficients $a_n$ et $b_n$, n étant un nombre entier variant de 1 à 2, selon les relations suivantes :

[Math 1]

$$\begin{cases} a_n = \dfrac{2}{N_{tap}} \dfrac{1}{\mathrm{sinc}\left(\frac{1}{2}n\omega\, T_{int}\right)} \displaystyle\sum_{k=0}^{N_{tap}-1} I_k \, \cos\left(n\omega k T_e\right) \\[4mm] b_n = \dfrac{2}{N_{tap}} \dfrac{1}{\mathrm{sinc}\left(\frac{1}{2}n\omega T_{int}\right)} \displaystyle\sum_{k=0}^{N_{tap}-1} I_k \, \sin\left(n\omega k T_e\right) \end{cases}$$

où $\omega$ est la pulsation associée à la première fréquence ;
- la détermination de coefficients $c_n$ selon la relation suivante :

[Math 2]

$$c_n = \sqrt{a_n^2 + b_n^2}$$

- la détermination du degré de polarisation estimé DOP' selon la relation suivante :

[Math 3]

$$DOP' = \frac{c_1 - c_2}{c_1 + c_2}$$

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement un mode de réalisation d'un système de détermination du degré de polarisation estimé d'un rayonnement électromagnétique ;

la figure 2 est un graphique illustrant un exemple d'intensité lumineuse d'un rayonnement électromagnétique réfléchi par une scène reçu par le système de la figure 1 ;

la figure 3 est une image en niveau de gris du degré de polarisation du rayonnement réfléchi par une scène éclairée par un rayonnement non polarisé ;

la figure 4 est une image en niveau de gris du degré de polarisation du rayonnement réfléchi par la même scène qu'en figure 3 éclairée par un rayonnement polarisé de façon rectiligne ;

la figure 5 est une image en niveau de gris du degré de polarisation estimé du rayonnement réfléchi par la même scène qu'en figure 3 éclairée par deux rayonnements polarisés de façon rectiligne ;

la figure 6 est une vue en coupe, partielle et schématique, illustrant un mode de réalisation d'un dispositif d'acquisition d'image du système de la figure 1 ;

la figure 7 est une vue de dessus schématique représentant un exemple d'agencement des pixels du dispositif d'acquisition d'image de la figure 6 ;

la figure 8 représente schématiquement un mode de réalisation d'un circuit d'un pixel du dispositif d'acquisition d'image de la figure 6 ;

la figure 9 est une vue en coupe, partielle et schématique, illustrant un autre mode de réalisation d'un dispositif d'acquisition d'image du système de la figure 1 comprenant des pixels 2D et des pixels Z ;

la figure 10 est une vue de dessus schématique représentant un exemple d'agencement de pixels 2D et de pixels Z du dispositif d'acquisition d'image de la figure 9 ;

la figure 11 est une vue de dessus schématique représentant un autre exemple d'agencement de pixels 2D et de pixels Z du dispositif d'acquisition d'image de la figure 9 ;

la figure 12 une vue en coupe illustrant de façon schématique et partielle un mode de réalisation d'un dispositif d'acquisition d'image du système de la figure 1 adapté à l'acquisition d'une image 2D et d'une image du degré de polarisation estimé ;

la figure 13 est une vue de dessus schématique représentant un autre exemple d'agencement de pixels 2D et de pixels Z du dispositif d'acquisition d'image de la figure 12 ;

la figure 14 est une vue en coupe illustrant de façon schématique et partielle un autre mode de réalisation d'un dispositif d'acquisition d'image du système de la figure 1 adapté à l'acquisition d'une image 2D et d'une image du degré de polarisation estimé ; et

la figure 15 est une vue de dessus schématique représentant un exemple d'agencement de pixels 2D et de pixels Z du dispositif d'acquisition d'image de la figure 14.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments. En outre, on considère ici que les termes "isolant" et "conducteur" signifient respectivement "isolant électriquement" et "conducteur électriquement".

Sauf précision contraire, les expressions "environ", "approximativement", "sensiblement", et "de l'ordre de" signifient à 10 % près, de préférence à 5 % près. Sauf précision contraire, les adjectifs numéraux ordinaux, tels que "premier", "deuxième", etc., sont utilisés seulement pour distinguer des éléments entre eux. En particulier, ces adjectifs ne limitent pas les modes de réalisation décrits à un ordre particulier de ces éléments.

De façon générale, un rayonnement électromagnétique peut se décomposer en une composante complexe $E_x$ selon une première direction $\vec{x}$ et une composante complexe $E_y$ selon la deuxième direction $\vec{y}$. L'état de polarisation du rayonnement électromagnétique peut être représenté par le vecteur de Stokes $[S_0, S_1, S_2, S_3]^T$. Le paramètre $S_0$ correspond à l'intensité totale mesurée du rayonnement électromagnétique, strictement positive. Le paramètre $S_3$ correspond à l'intensité de polarisation circulaire, qui peut être positive ou négative selon le sens de rotation. La somme $S_1 + iS_2$ correspond à l'intensité de polarisation rectiligne, nombre complexe qui rend compte de l'inclinaison $\theta$ de la direction de polarisation. Le vecteur de Stokes $[S_0, S_1, S_2, S_3]^T$ peut être défini selon la relation Math 4 suivante :

[Math 4]

$$\begin{bmatrix} S_0 \\ S_1 \\ S_2 \\ S_3 \end{bmatrix} = \begin{bmatrix} |E_x|^2 + |E_y|^2 \\ |E_x|^2 - |E_y|^2 \\ 2\mathrm{Re}(E_x E_y^*) \\ 2\mathrm{Im}(E_x E_y^*) \end{bmatrix}$$

où les deux barres verticales | | désignent l'amplitude, l'astérisque * désigne le conjugué complexe, Re désigne la partie réelle d'un nombre complexe et Im désigne la partie imaginaire d'un nombre complexe.

Un rayonnement électromagnétique peut être complètement polarisé, partiellement polarisé ou complètement non polarisé. On peut décrire un rayonnement partiellement polarisé, comme la somme d'un rayonnement polarisé et d'un rayonnement complètement non polarisé. Le degré de polarisation DOP, également appelé taux de polarisation , est le rapport entre la puissance du signal polarisé $I_{pol}$ et la puissance totale $I_{tot}$, que l'on peut écrire ainsi avec les paramètres de Stokes selon la relation Math 5 suivante :

[Math 5]

$$DOP = \frac{I_{pol}}{I_{tot}} = \frac{\sqrt{S_1{}^2 + S_2{}^2 + S_3{}^2}}{S_0}$$

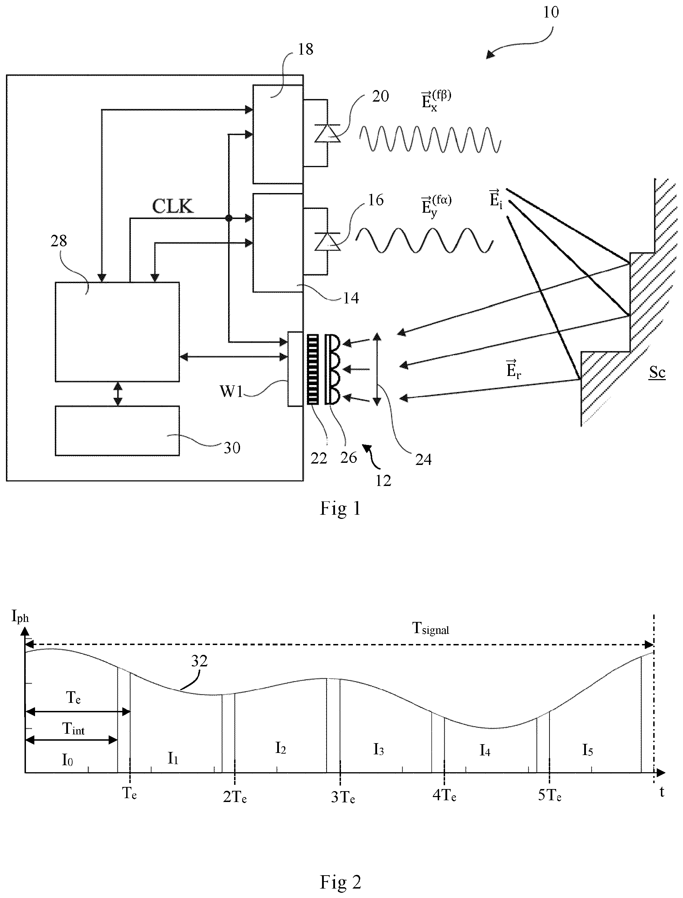

La figure 1 représente schématiquement un mode de réalisation d'un système 10 de détermination du degré de polarisation d'un rayonnement électromagnétique comprenant un dispositif d'acquisition d'images 12.

Le système 10 comprend un premier circuit d'émission de signal lumineux 14 qui pilote une première source lumineuse 16, par exemple une diode électroluminescente. La première source lumineuse 16 émet une première onde électromagnétique $\vec{E}_y^{(f\alpha)}$. La première onde électromagnétique est une onde à une première fréquence f$\alpha$, polarisée de façon rectiligne selon une première direction $\vec{y}$. La première onde électromagnétique est à une longueur d'onde dans le spectre du proche infrarouge, par exemple dans la plage de 700 nm à 2000 nm, par exemple autour de 940 nm, autour de 1100 nm ou autour de 1400 nm qui sont les longueur d'onde qui n'apparaissent pas dans le spectre solaire car absorbées par l'atmosphère. Un polariseur rectiligne, non représenté, peut être associé à la première source lumineuse 16 pour assurer la polarisation rectiligne de la première onde électromagnétique $\vec{E}_y^{(f\alpha)}$ selon la première direction $\vec{y}$.

Le système 10 comprend un deuxième circuit d'émission de signal lumineux 18 qui pilote une deuxième source lumineuse 20, par exemple une diode électroluminescente. La deuxième source lumineuse 20 émet une deuxième onde électromagnétique $\vec{E}_x^{(f\beta)}$. La deuxième onde électromagnétique est une onde à une deuxième fréquence f$\beta$, polarisée de façon rectiligne selon une deuxième direction $\vec{x}$. Selon un mode de réalisation, la première direction $\vec{y}$ est perpendiculaire à la deuxième direction $\vec{x}$. La deuxième onde électromagnétique est à une longueur d'onde dans le spectre du proche infrarouge, par exemple dans la plage de 700 nm à 2000 nm, par exemple autour de 940 nm, autour de 1100 nm ou autour de 1400 nm qui sont les longueur d'onde qui n'apparaissent pas dans le spectre solaire car absorbées par l'atmosphère. Un polariseur rectiligne, non représenté, peut être associé à la deuxième source lumineuse 20 pour assurer la polarisation rectiligne de la deuxième onde électromagnétique $\vec{E}_x^{(f\beta)}$ selon la deuxième direction $\vec{x}$.

Selon un mode de réalisation, les première et deuxième ondes électromagnétiques $\vec{E}_y^{(f\alpha)}$ et $\vec{E}_x^{(f\beta)}$ sont émises simultanément. Selon un autre mode de réalisation, les première et deuxième ondes électromagnétiques $\vec{E}_y^{(f\alpha)}$ et $\vec{E}_x^{(f\beta)}$ sont émises successivement. Selon un autre mode de réalisation, la première source lumineuse 16 est configurée pour émettre une première lumière structurée et la deuxième source lumineuse 20 est configurée pour émettre une deuxième lumière structurée. Dans ce cas, les première et deuxième lumières structurées sont émises successivement.

En pratique, les sources lumineuses 16 et 20 émettent de la lumière à une longueur d'onde déterminée ou dans une gamme de longueurs d'ondes déterminée, de préférence une gamme de longueurs d'ondes étroite, par exemple une gamme de largeur à mi-hauteur inférieure à 3 nm, par exemple, pour la source lumineuse 16, une source de longueur d'onde centrale d'émission de l'ordre de 940 nm.

La première onde électromagnétique et la deuxième onde électromagnétique sont par exemple émises par l'intermédiaire d'une ou plusieurs lentilles (non représentées en figure 1). Selon l'invention, la deuxième fréquence f$\beta$ est égale à un multiple M de la première fréquence f$\alpha$, M étant un nombre entier supérieur ou égal à 2. Selon un mode de réalisation, M est égal à 2 et la deuxième fréquence f$\beta$ est égale au double de la première fréquence f$\alpha$.

Le signal lumineux $\vec{E}_i$ comprenant la première onde électromagnétique et la deuxième onde électromagnétique est émis vers une scène Sc.

Le dispositif d'acquisition d'image 12 comprend un capteur d'images W1 et un polariseur rectiligne 22 orienté selon la première direction $\vec{x}$. La lumière du signal lumineux réfléchi $\vec{E}_r$ à partir de la scène est captée par le capteur W1 par l'intermédiaire du polariseur rectiligne 22. Le capteur d'images W1 comprend par exemple plusieurs pixels, appelés pixels Z par la suite, aptes à recevoir le signal lumineux réfléchi par la scène Sc, et utilisés pour la détermination d'une estimation du degré de polarisation du signal lumineux réfléchi par la scène Sc. Le dispositif d'acquisition d'image 12 peut en outre comprendre un système optique, par exemple entre le polariseur rectiligne 22 et la scène comprenant par exemple un objectif 24 de formation d'image et d'un réseau de microlentilles 26, qui focalise la lumière sur les pixels individuels du capteur W1.

Un processeur 28 du système 10 est par exemple couplé au dispositif d'acquisition d'image 12 et aux circuits d'émission du signal lumineux 14 et 18 et détermine, sur la base des signaux captés par les pixels du dispositif d'acquisition d'image 12, pour chaque pixel, un degré de polarisation estimé du signal lumineux capté par le pixel. L'image du degré de polarisation estimé produite par le processeur 28 est par exemple mémorisée dans une mémoire 30 du système 10.

La première onde électromagnétique $\vec{E}_y^{(f\alpha)}$ émise par la première source lumineuse 16 peut correspondre à une onde sinusoïdale et s'écrit alors selon la relation Math 6 suivante :

[Math 6]

$$\vec{E}_y^{(f\alpha)} = E_{y0} \cos(2\pi f\alpha\ t + \phi_{\alpha0})\vec{y} = E_y^{(f\alpha)}\ \vec{y}$$

La deuxième onde électromagnétique $\vec{E}_x^{(f\beta)}$ émise par la deuxième source lumineuse 20 peut correspondre à une onde sinusoïdale et s'écrit alors selon la relation Math 7 suivante :

[Math 7]

$$\vec{E}_x^{(f\beta)} = E_{x0} \cos(2\pi f\beta\ t + \phi_{\beta0})\vec{x} = E_x^{(f\beta)}\ \vec{x}$$

Le signal lumineux $\vec{E}_i$ émis vers la scène Sc est donné par la relation Math 8 suivante :

[Math 8]

$$\vec{E}_i = E_x^{(f\beta)}\ \vec{x} + E_y^{(f\alpha)}\ \vec{y}$$

Le signal lumineux réfléchi par la scène $\vec{E}_r$ est modélisé par la relation Math 9 suivante :

[Math 9]

$$\vec{E}_r = \left(r_x E_x^{(f\beta)} + \frac{\sqrt{2}\ d}{2}\ E_x^{(f\beta)} + \frac{\sqrt{2}\ d}{2}\ E_y^{(f\alpha)}\right)\ \vec{x} + \left(r_y\ E_y^{(f\alpha)} + \frac{\sqrt{2}\ d}{2}\ E_y^{(f\alpha)} + \frac{\sqrt{2}\ d}{2}\ E_x^{(f\beta)}\right)\ \vec{y}$$

où $r_x$ correspond à la réflectivité optique selon la direction $\vec{x}$, $r_y$ correspond à la réflectivité optique selon la direction $\vec{y}$, et d correspond à la réflectivité diffuse.

Après passage au travers du polariseur 22, seule la composante selon la direction $\vec{x}$ est conservée de sorte que le signal lumineux atteignant chaque pixel Z a une amplitude $E_{ph}$ donnée par la relation Math 10 suivante :

[Math 10]

$$E_{ph} = r_x E_{x0} + \frac{\sqrt{2}\ d}{2}\ E_{x0} + \frac{\sqrt{2}\ d}{2}\ E_{y0}$$

L'intensité lumineuse $I_{ph}(t)$ atteignant chaque pixel Z est donnée par la relation Math 11 suivante :

[Math 11]

$$I_{ph}(t)= R\, I_{x0}^{(f\beta)}(t)+ \frac{D}{2}\, I_{x0}^{(f\beta)}(t)+ \frac{D}{2}\, I_{y0}^{(f\alpha)}(t)$$

où R est égal à $r_x^2$ et D est égal à $d^2$.

En appelant $\omega$ la pulsation correspondant à la fréquence f$\alpha$ et en rappelant que f$\beta$ est égal à M fois f$\alpha$, l'intensité lumineuse $I_{ph}(t)$ atteignant chaque pixel Z peut également s'écrire selon la relation Math 12 suivante :

[Math 12]

$$I_{ph}(t)=c_\alpha \sin(\omega t+\phi_\alpha)+c_\beta \sin(M\omega t+\phi_\beta)$$

$$= a_\alpha \cos(\omega t)+b_\alpha \sin(\omega t) + a_\beta \cos(M\omega t)+b_\beta \sin(M\omega t)$$

La figure 2 représente un exemple d'une courbe 32 d'évolution, en fonction du temps t, de l'intensité lumineuse $I_{ph}(t)$ du signal lumineux reçu par l'un des pixels du dispositif d'acquisition d'image 12 dans le cas où la fréquence f$\beta$ est le double de la fréquence f$\alpha$. Il s'agit d'un signal pseudo-périodique de période $T_{signal}$.

Le signal capté par chaque pixel Z est échantillonné pour fournir un nombre $N_{tap}$ d'échantillons $I_k$, où $N_{tap}$ est un nombre entier supérieur ou égal à 5 et k est un nombre entier variant de 0 à $N_{tap}$-1. Chaque échantillon $I_k$ peut s'écrire selon la relation Math 13 suivante :

[Math 13]

$$I_k= \frac{1}{T_{int}}\cdot \int_{kT_e - \frac{1}{2}T_{int}}^{kT_e+\frac{1}{2}T_{int}} I_{ph}(t)\,dt$$

où $T_{int}$ est la durée d'intégration pour chaque échantillon $I_k$ et où $T_e$ est la durée séparant les débuts de deux intégrations successives. Chaque échantillon correspond à une partie de l'aire sous la courbe 32. A titre d'exemple, six échantillons $I_0$, $I_1$, $I_2$, $I_3$, $I_4$ et $I_5$ sont illustrés en figure 2.

Chaque échantillon $I_k$ est par exemple intégré sur un grand nombre de périodes $T_{signal}$ par exemple sur environ 100000 périodes, ou plus généralement entre 10000 et 10 millions de périodes. Chaque fenêtre d'échantillonnage a par exemple une durée $T_{int}$ allant jusqu'à un quart de la période du signal lumineux. Dans l'exemple de la figure 2, chaque fenêtre d'échantillonnage est d'une même durée $T_{int}$. Il peut, ou non, y avoir un intervalle de temps séparant une fenêtre d'échantillonnage de la suivante et, dans certains cas, il peut y avoir un chevauchement entre les fenêtres d'échantillonnage. Chaque fenêtre d'échantillonnage a par exemple une durée $T_{int}$ comprise entre 10 % et 30 % de la période $T_{signal}$ du signal lumineux dans le cas d'un pixel capturant six échantillons par période $T_{signal}$.

Les coefficients $a_\alpha$, $a_\beta$, $b_\alpha$, et $b_\beta$ sont donnés par les relations Math 14 suivantes :

[Math 14]

$$
\begin{cases}
a_\alpha = \dfrac{2}{N_{tap}} \dfrac{1}{\text{sinc}\left(\dfrac{1}{2}\omega T_{int}\right)} \displaystyle\sum_{k=0}^{N_{tap}-1} I_k \cos(\omega k T_e) \\[4mm]
b_\alpha = \dfrac{2}{N_{tap}} \dfrac{1}{\text{sinc}\left(\dfrac{1}{2}\omega T_{int}\right)} \displaystyle\sum_{k=0}^{N_{tap}-1} I_k \sin(\omega k T_e)
\end{cases}
$$

$$
\begin{cases}
a_\beta = \dfrac{2}{N_{tap}} \dfrac{1}{\text{sinc}\left(\dfrac{1}{2}M\omega T_{int}\right)} \displaystyle\sum_{k=0}^{N_{tap}-1} I_k \cos(M\omega k T_e) \\[4mm]
b_\beta = \dfrac{2}{N_{tap}} \dfrac{1}{\text{sinc}\left(\dfrac{1}{2}M\omega T_{int}\right)} \displaystyle\sum_{k=0}^{N_{tap}-1} I_k \sin(M\omega k T_e)
\end{cases}
$$

Selon un mode de réalisation, pour déterminer les coefficients $a_\alpha$, $b_\alpha$, $a_\beta$, $b_\beta$, le signal lumineux reçu est échantillonné en transférant, successivement et à intervalle régulier, des charges photogénérées dans un pixel Z pendant la fenêtre d'échantillonnage du premier échantillon $I_0$, des charges photogénérées dans le même pixel Z ou un autre pixel Z pendant la fenêtre d'échantillonnage du deuxième échantillon $I_1$, des charges photogénérées dans le même pixel Z ou un autre pixel Z pendant la fenêtre d'échantillonnage du troisième échantillon $I_2$, des charges photogénérées dans le même pixel Z ou un autre pixel Z pendant la fenêtre d'échantillonnage du quatrième échantillon $I_3$, des charges photogénérées dans le même pixel Z ou un autre pixel Z pendant la fenêtre d'échantillonnage du cinquième échantillon $I_4$, et des charges photogénérées dans le même pixel Z ou un autre pixel Z pendant la fenêtre d'échantillonnage du sixième échantillon $I_5$. Ces six transferts sont répétés un grand nombre de fois, par exemple 100000 fois avant que les signaux obtenus soient lus par le circuit de sortie. Selon un autre mode de réalisation, un pixel Z peut être configuré pour acquérir des charges photogénérées pour seulement deux ou trois échantillons pendant une même phase d'acquisition. Dans ce cas, deux ou trois phases d'acquisition peuvent être réalisées pour obtenir l'ensemble des échantillons.

Les coefficients $c_\alpha$ et $c_\beta$ sont donnés par les relations Math 15 suivantes :

[Math 15]

$$
\begin{cases}
c_\alpha = \sqrt{a_\alpha^2 + b_\alpha^2} \\[3mm]
c_\beta = \sqrt{a_\beta^2 + b_\beta^2}
\end{cases}
$$

Les coefficients $c_\alpha$ et $c_\beta$ peuvent également être obtenus à partir de la relation Math 11 décrite précédemment en séparant les composantes à la fréquence $f_\alpha$ et les composantes à la fréquence $f_\beta$. On obtient alors les relations Math 16 suivantes :

[Math 16]

$$
\begin{cases}
c_\beta = R\, I_{x0}^{(f\beta)} + \dfrac{D}{2} I_{x0}^{(f\beta)} \\[4mm]
c_\alpha = \dfrac{D}{2} I_{y0}^{(f\alpha)}
\end{cases}
$$

Le rapport entre les intensités lumineuses $I_{x0}^{(f\beta)}$ et $I_{y0}^{(f\alpha)}$ est connu. A titre d'exemple, si on considère que les sources lumineuses 16 et 22 émettent des signaux lumineux de mêmes intensités, l'intensité $I_{x0}^{(f\beta)}$ est égale à l'intensité $I_{y0}^{(f\alpha)}$, et on obtient l'égalité Math 17 suivante :

[Math 17]

$$\frac{c_\beta - c_\alpha}{c_\alpha + c_\beta} = \frac{R}{R+D}$$

Une estimation du degré de polarisation DOP' du rayonnement atteignant le pixel Z, appelé degré de polarisation estimé par la suite, est prise égale à ce rapport selon la relation Math 18 suivante :

[Math 18]

$$DOP' = \frac{c_\beta - c_\alpha}{c_\beta + c_\alpha}$$

Le nombre d'échantillons $N_{tap}$ utilisés dépend notamment de la précision souhaitée. Plus le nombre d'échantillons $N_{tap}$ utilisés est grand, plus le niveau de bruit acceptable est grand.

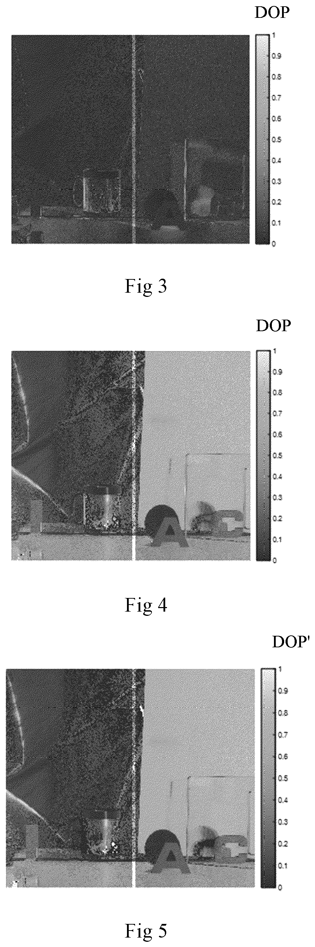

La figure 3 est une image en niveau de gris du degré de polarisation DOP du rayonnement réfléchi par une scène éclairée par une lumière non polarisée. Le DOP d'une onde électromagnétique plane non polarisée est égal à 0 et le DOP d'une onde électromagnétique plane polarisée est égal à 1. Comme cela apparaît sur cette figure, le degré de polarisation DOP du rayonnement réfléchi par la scène est nulle ou faible sur la majeure partie de l'image, ce qui signifie que le rayonnement réfléchi est pour l'essentiel non polarisée. Seule les réflexions sur certaines parties de la scène tendent à polariser localement le rayonnement réfléchi.

La figure 4 est une image en niveau de gris du degré de polarisation DOP du rayonnement réfléchi par la même scène qu'en figure 3 éclairée par une lumière polarisée de façon rectiligne. Comme cela apparaît sur cette figure, certains éléments de la scène dépolarisent le rayonnement réfléchi, tandis que d'autres éléments de la scène ne dépolarisent pas le rayonnement réfléchi.

La figure 5 est une image en niveau de gris du degré de polarisation estimé DOP' du rayonnement réfléchi par la même scène qu'en figure 3 obtenu par le système 10 représenté en figure 1. La figure 5 est sensiblement identique à la figure 4, ce qui montre que le degré de polarisation estimé DOP' est une estimation pertinente du degré de polarisation DOP.

Dans le mode de réalisation décrit précédemment, les signaux lumineux émis par les sources lumineuses 16 et 20 ont chacun la forme d'une onde sinusoïdale. Toutefois, dans des variantes de réalisation, les signaux lumineux émis par les sources lumineuses 16 et 20 pourraient chacun avoir une forme périodique différente, par exemple constituée d'une somme d'ondes sinusoïdales ayant au moins une fréquence distincte par source, ou d'ondes en créneaux avec M correspondant à un nombre pair.

Dans ce cas, la relation Math 12 décrite précédemment est remplacée par la relation Math 19 suivante :

[Math 19]

$$I_{ph}(t) = \sum_{n=1}^{N_{harmo}} c_n \sin(n\omega t + \phi_n) = \sum_{n=1}^{N_{harmo}} a_n \cos(n\omega t) + b_n \sin(n\omega t)$$

où $N_{harmo}$ est égal au nombre d'harmoniques considéré.

Selon un mode de réalisation, seules la première harmonique de chaque onde électromagnétique est utilisée de sorte que les relations Math 14 décrites précédemment peuvent être utilisées pour la détermination des coefficients $a_\alpha$, $a_\beta$, $b_\alpha$, et $b_\beta$.

Selon un mode de réalisation, le système 10 est en outre configuré pour déterminer une image de profondeur. Dans ce but, selon un mode de réalisation, le système 10 est en outre configuré pour détecter la phase du signal reçu pour former une image de profondeur. Il y a un déphasage $\Delta\phi_\beta$ entre le signal lumineux émis et le signal lumineux reçu, qui représente le temps de vol (ToF) du premier signal lumineux en provenance de la diode électroluminescente 16 vers le dispositif d'acquisition d'image 12 par l'intermédiaire d'un objet de la scène Sc qui réfléchit le signal lumineux. Une estimation de la distance d à l'objet dans la scène Sc peut ainsi être calculée en utilisant l'équation Math 20 suivante :

[Math 20]

$$d = \frac{c}{4\pi f\beta}\Delta\Phi_\beta$$

où c désigne la vitesse de la lumière.

De même, une estimation de la distance d à l'objet dans la scène Sc peut aussi être calculée en utilisant l'équation Math 21 suivante :

[Math 21]

$$d = \frac{c}{4\pi f\alpha}\Delta\Phi_\alpha$$

si le signal capté est suffisant, afin de préciser la distance des objets les plus lointains, c'est-à-dire les distances où d est supérieur à $c/(2f\beta)$, sachant que la fréquence $f\alpha$ est inférieure strictement à la fréquence $f\beta$. L'utilisation de l'onde électromagnétique à la fréquence $f\alpha$ pour la détermination de la distance d peut aussi permettre de résoudre les sauts de phase $2*n$ qui apparaissent en utilisant l'onde électromagnétique à la fréquence $f\beta$ pour les objets les plus lointains de la scène Sc. Pour les objets proches, comme les deux ondes électromagnétiques émises par les sources 16 et 20 se reflètent sur le même objet et empruntent le même chemin optique, les distances déterminées par les équations Math 20 et Math 21 sont en théorie les mêmes.

Le déphasage $\Delta\phi_\beta$ est par exemple estimé sur la base d'un échantillonnage du signal capté par un pixel Z pendant au moins trois fenêtres d'échantillonnage distinctes, de préférence pendant quatre fenêtres d'échantillonnage distinctes, pendant chaque période du signal lumineux. Une technique basée sur la détection de quatre échantillons par période est décrite plus en détail dans la publication de R. Lange et de P. Seitz intitulée "Solid-state TOF range camera", IEE J. on Quantum Electronics, vol. 37, No.3, March 2001, dont le contenu sera considéré comme faisant partie intégrante de la présente description dans la mesure permise par la loi. Le présent mode de réalisation est par exemple basé sur la détection de quatre échantillons par période.

Le processeur 20 détermine, sur la base des signaux captés par les pixels Z du dispositif d'acquisition d'image 12, les distances correspondantes des objets dans la scène Sc. L'image de profondeur produite par le processeur 20 est par exemple mémorisée dans la mémoire 22.

Pour la détermination de la profondeur en utilisant le déphasage, le minutage des fenêtres d'échantillonnage pour l'obtention des échantillons $I_k$ est commandé de manière à être synchronisé avec le minutage du premier signal lumineux émis par la source 16. Par exemple, le circuit d'émission de signal lumineux 14 génère un signal lumineux basé sur un signal d'horloge CLK (figure 1), et le dispositif d'acquisition d'image 12 reçoit le même signal d'horloge CLK pour commander le temps de fin de chaque fenêtre d'échantillonnage en utilisant par exemple des éléments de retard pour introduire les déphasages appropriés.

En se basant sur les échantillons $I_k$ intégrés du signal lumineux, et pour une onde lumineuse purement sinusoïdale, les déphasages $\Delta\phi_\beta$ et $\Delta\phi_\alpha$ du signal lumineux peuvent être déterminés en utilisant les relations Math 22 suivantes :

[Math 22]

$$\Delta\phi_\alpha = \phi_{\alpha 0} - \phi_\alpha$$

$$\Delta\phi_\beta = \phi_{\beta 0} - \phi_\beta$$

$$\phi_\alpha = \tan^{-1}\frac{a_\alpha}{b_\alpha}$$

$$\phi_\beta = \tan^{-1}\frac{a_\beta}{b_\beta}$$

où les phases $\phi_{\alpha 0}$ et $\phi_{\beta 0}$ sont celles définies par les relations Math 6 et Math 7. En outre, dans le cas où le nombre d'échantillons $N_{tap}$ est égal à 4, et où une seule onde électromagnétique à une fréquence f est utilisée, on obtient l'équation

Math 23 suivante :

[Math 23]

$$\Delta\Phi=\arctan\left(\frac{I_3-I_1}{I_0-I_2}\right)$$

Selon le mode de réalisation de détermination d'une image de profondeur, les première et deuxième ondes électromagnétiques $\vec{E}_y^{(f\alpha)}$ et $\vec{E}_x^{(f\beta)}$ sont émises simultanément. Selon un autre mode de réalisation, l'image de profondeur est déterminée par détection directe du temps de vol (Direct ToF). La première source lumineuse 16 est alors adaptée pour émettre des impulsions lumineuses vers la scène Sc, et le dispositif d'acquisition 12 est configuré pour détecter le signal lumineux en retour réfléchi par des objets de la scène. Par le calcul du temps de vol du signal lumineux, il est déterminé la distance au dispositif d'acquisition d'objets de la scène. A titre d'exemple, les pixels du dispositif d'acquisition 12 peuvent utiliser des photodiodes de type SPAD (diode à avalanche à photon unique). Dans un tel mode de réalisation, les première et deuxième ondes électromagnétiques $\vec{E}_y^{(f\alpha)}$ et $\vec{E}_x^{(f\beta)}$ peuvent être émises successivement. Dans ce cas, les ondes $\vec{E}_y^{(f\alpha)}$ et $\vec{E}_x^{(f\beta)}$ ne sont pas modulées par les fréquences fα et fβ. Les ondes s'écrivent alors $\vec{E}_y$ et $\vec{E}_x$.

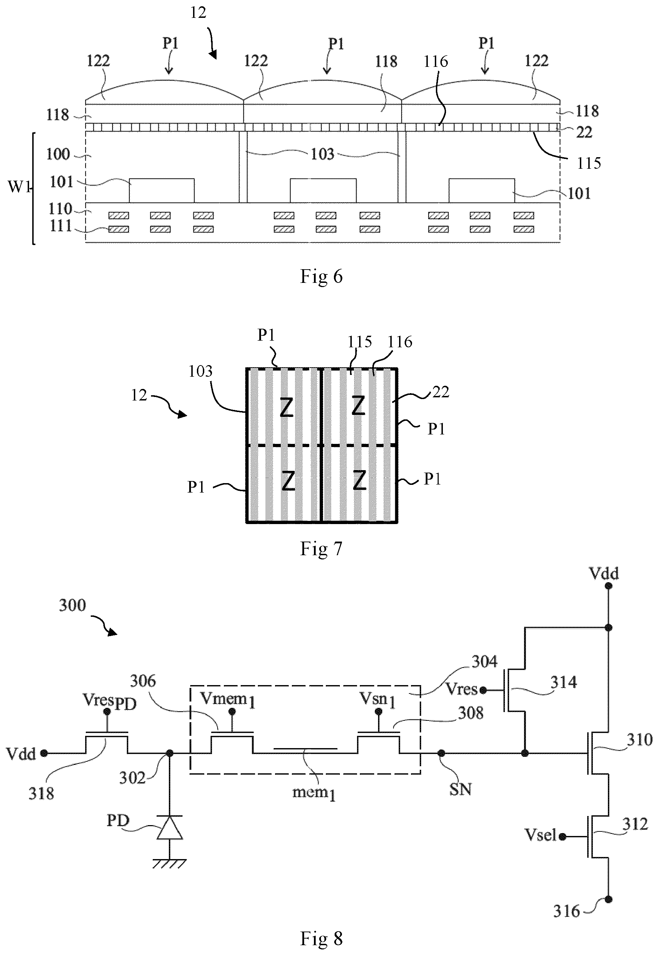

La figure 6 est une vue en coupe illustrant de façon schématique et partielle un mode de réalisation du dispositif d'acquisition d'images 12.

Le dispositif d'acquisition d'images 12 comprend le capteur W1 formé dans et sur un substrat semiconducteur 100, par exemple un substrat en silicium monocristallin, le capteur W1 comprenant une pluralité de pixels P1, chaque pixel P1 comprenant une photodiode.

On notera que dans la présente description, on entend respectivement par face avant et face arrière d'un élément, la face de l'élément destinée à être tournée vers la scène dont on souhaite acquérir une image, et la face de l'élément opposée à sa face avant. Dans le mode de réalisation de la figure 6, les faces avant et arrière du dispositif d'acquisition d'images 12 sont respectivement sa face supérieure et sa face inférieure.

Dans le mode de réalisation représenté, chaque pixel P1 du capteur W1 comprend une photodiode 101 comprenant une ou plusieurs régions implantées, localisées, formées dans le substrat semiconducteur 100. Dans ce mode de réalisation, la ou les régions implantées de la photodiode 101 sont disposées du côté de la face arrière du substrat 100. Chaque pixel P1 peut en outre comprendre un ou plusieurs composants supplémentaires (non représentés), par exemple des transistors à effet de champ à grille isolée, également appelés transistors MOS, formés du côté de la face arrière du substrat 100, par exemple dans le substrat 100 et sur la face arrière du substrat 100. Le capteur W1 comprend en outre un empilement d'interconnexion 110, constitué de couches diélectriques et conductrices alternées revêtant la face arrière du substrat 100, dans lequel sont formées des pistes conductrices et/ou bornes de connexion électrique 111 connectant les pixels P1 du capteur W1 à un circuit périphérique de commande et d'alimentation, non représenté.

Dans le mode de réalisation représenté, le capteur W1 comprend des murs d'isolation verticaux 103 traversant le substrat 100 sur toute son épaisseur et délimitant les portions de substrat correspondant respectivement aux pixels du capteur W1. Les murs d'isolation verticaux 103 ont notamment une fonction d'isolation optique, et peuvent en outre avoir une fonction d'isolation électrique. A titre d'exemple, les murs d'isolation verticaux 103 sont en un matériau diélectrique, par exemple de l'oxyde de silicium. A titre de variante, les murs d'isolation 103 peuvent ne pas être présents.

L'épaisseur du substrat 100 est par exemple comprise entre 2 μm et 10 μm, par exemple entre 3 μm et 5 μm.

A titre d'exemple, en vue de dessus, la plus grande dimension de chaque pixel P1 du capteur W1 est inférieure à 10 μm, par exemple inférieure à 5 μm, par exemple inférieure à 2 μm, par exemple de l'ordre de 1 μm.

Dans le mode de réalisation représenté, la face avant du substrat 100 est revêtue du polariseur rectiligne 22. Chaque pixel P1 utilisé pour la détermination du DOP' est recouvert d'un polariseur rectiligne 22. Chaque polariseur rectiligne 22 peut comprendre une couche 115 d'un premier matériau, dans laquelle s'étendent des bandes 116 d'un deuxième matériau, les bandes 116 s'étendant parallèlement à la première direction $\vec{x}$. Le premier matériau est par exemple de l'oxyde de silicium ou de l'air. Le deuxième matériau est par exemple le silicium ou un métal, notamment l'aluminium, le cuivre, ou le tungstène. La largeur de chaque bande 116 peut varier de 50 nm à 150 nm. L'écart entre deux bandes adjacentes peut varier de 50 nm à 150 nm. L'épaisseur du polariseur 22 peut varier de 100 nm à 300 nm. Le polariseur rectiligne 22 peut en outre comprendre une couche d'antireflet. A titre d'exemple, la couche 115 est disposée sur et en contact avec la face avant du substrat 100.

Dans le présent mode de réalisation, tous les pixels P1 du capteur W1 sont utilisés pour la détermination du degré de polarisation estimé de sorte que le polariseur 22 peut recouvrir tous les pixels P1. La fabrication du polariseur 22 est alors simplifiée.

La figure 7 est une vue de dessus du dispositif 12 dans laquelle seuls les murs d'isolation verticaux 103 délimitant quatre pixels P1 adjacents et le polariseur 22 ont été représentés.

Dans le mode de réalisation de la figure 6, chaque pixel P1 comprend un filtre 118, par exemple une couche de résine noire ou un filtre interférentiel, disposé du côté de la face avant du substrat 100, par exemple sur et en contact avec la face avant du polariseur 22, en vis-à-vis de la photodiode 101 du pixel. Chaque filtre 118 est adapté à transmettre la lumière dans la gamme de longueurs d'ondes d'émission des sources lumineuses 16 et 20. De préférence, le filtre 118 est adapté à transmettre la lumière uniquement dans une bande de longueurs d'ondes relativement étroite centrée sur la gamme de longueurs d'ondes d'émission des sources lumineuses 16 et 20, par exemple une gamme de longueurs d'ondes de largeur à mi-hauteur inférieure à 30 nm, par exemple inférieure à 20 nm, par exemple inférieure à 10 nm. Le filtre 118 permet d'éviter une génération indésirable de porteurs de charges dans la photodiode des pixels P1 sous-jacents sous l'effet d'un rayonnement lumineux ne provenant pas des sources lumineuses 16 et 20. Dans le présent mode de réalisation, tous les pixels P1 du capteur W1 sont utilisés pour la détermination du degré de polarisation estimé de sorte que les filtres 118 peuvent correspondre à un filtre unique qui recouvre tous les pixels P1. La fabrication du filtre 118 est alors simplifiée.

Chaque pixel P1 du capteur W1 peut en outre comprendre une microlentille 122 disposée du côté de la face avant du substrat 100, par exemple sur et en contact avec le filtre 118 du pixel, adaptée à focaliser la lumière incidente sur la photodiode 101 du pixel P1. A titre de variante, le filtre 118 peut ne pas être intégré au pixel P1, mais être réalisé par un filtre extérieur au pixel P1. Le filtre 118 n'est alors pas présent ou replacé par une couche transparente, par exemple du même matériau que celui des microlentilles 122.

La figure 8 est un diagramme de circuit illustrant un mode de réalisation de circuit 300 d'un pixel P1.

Le circuit 300 est apte à réaliser une mémorisation en charge. Le circuit 300 comprend un élément photosensible PD couplé entre un noeud 302 et une source d'alimentation de référence, par exemple la masse, l'élément photosensible étant par exemple la photodiode 101 de la figure 6. Le noeud 302 est couplé à un noeud de détection SN par l'intermédiaire d'un circuit d'échantillonnage 304. Le circuit d'échantillonnage 304 comprend une mémoire $mem_1$ couplée au noeud 302 par une porte de transfert 306 qui est par exemple un transistor MOS à canal n. La mémoire $mem_1$ est aussi couplée au noeud de détection SN par une porte de transfert supplémentaire 308, qui est aussi par exemple un transistor MOS à canal n. La porte de transfert 306 est commandée par un signal $Vmem_1$ appliqué à son noeud de commande, et la porte de transfert 308 est commandée par un signal $Vsn_1$ appliqué à son noeud de commande. La mémoire $mem_1$ fournit une zone de stockage de charge dans laquelle une charge transférée depuis l'élément photosensible PD est temporairement stockée.

Le circuit 300 comprend en outre un circuit de sortie formé d'un transistor à source suiveuse 310, d'un transistor de sélection 312 et d'un transistor de réinitialisation 314, ces transistors étant par exemple des transistors MOS à canal n. Le noeud de détection SN est couplé au noeud de commande du transistor 310, qui a par exemple son drain couplé à la source de tension d'alimentation Vdd, et sa source couplée à une ligne de sortie 316 du circuit de pixels 300 par le transistor 312 qui est commandé par un signal Vsel appliqué à sa grille. Le noeud de détection SN est aussi couplé à la source de tension d'alimentation Vdd à travers le transistor 314 qui est commandé par un signal Vres appliqué à sa grille. Dans des variantes de réalisation, le circuit de sortie pourrait être partagé par plusieurs pixels, le noeud de détection SN étant par exemple couplé au circuit d'échantillonnage d'un ou plusieurs pixels adjacents.

Le circuit 300 comprend en outre par exemple un transistor 318 couplant le noeud 302 à la source de tension d'alimentation Vdd et permettant à la photodiode PD d'être réinitialisée. Le transistor 318 est par exemple commandé par un signal $Vres_{PD}$. Il permet donc de contrôler le temps d'exposition en assurant une vidange de la photodiode PD avant un démarrage d'intégration synchrone pour toutes les photodiodes PD du capteur et d'assurer une fonction d'anti-éblouissement afin d'éviter un débordement de la photodiode dans les mémoires $mem_1$ lors de la lecture globale de la matrice.

Selon un mode de réalisation, le dispositif d'acquisition d'images 12 permet en outre l'acquisition d'une image en lumière visible, appelée image 2D par la suite. Dans ce but, certains des photodétecteurs 101 du capteur W1 sont adaptés à capter un rayonnement en lumière visible. Les pixels P1 du capteur W1 captant la lumière visible sont appelés pixels 2D par la suite. Un pixel d'une image correspond à l'élément unitaire de l'image affichée par un écran d'affichage. Pour l'acquisition d'images couleur, le capteur W1 comprend en général pour l'acquisition de chaque pixel d'une image au moins trois pixels 2D, qui captent chacun un rayonnement lumineux sensiblement dans une seule couleur (par exemple, le rouge, le vert et le bleu).

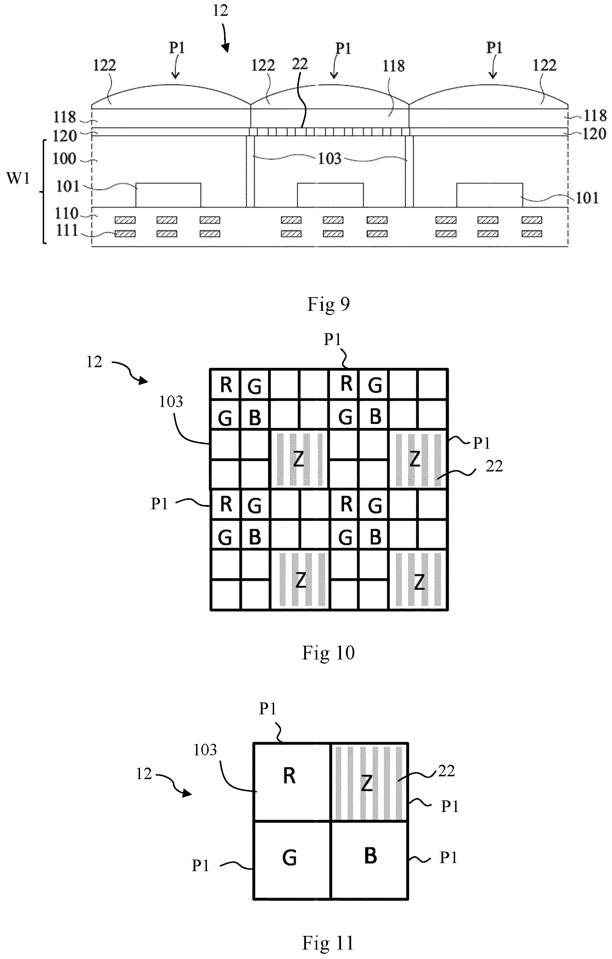

La figure 9 est une vue en coupe illustrant de façon schématique et partielle un autre mode de réalisation du dispositif d'acquisition d'images 12 comprenant des pixels Z et des pixels 2D. Le dispositif d'acquisition d'images 12 représenté en figure 9 comprend l'ensemble des éléments du dispositif d'acquisition d'images 12 représenté en figure 6, à la différence de certains pixels P1 sont des pixels Z utilisés pour la détermination du degré de polarisation estimé et que d'autres pixels P1 sont des pixels 2D. Le polariseur 22 n'est présent que sur les pixels Z et n'est pas présent sur les pixels 2D. En outre, les filtres 118 recouvrant des pixels 2D peuvent correspondre à des filtres colorés. De plus, chaque pixel 2D peut être recouvert d'un filtre 120 bloquant le rayonnement aux longueurs d'onde des sources 16 et 20.

La figure 10 est une vue de dessus schématique représentant un exemple d'agencement de pixels 2D pour l'acquisition d'une image 2D en couleur et de pixels Z du dispositif d'acquisition d'images 12 de la figure 9. Les pixels 2D sont agencés selon une matrice de Bayer, c'est-à-dire par groupes de quatre pixels 2D agencés en carré, dont deux pixels 2D diagonalement opposés captent respectivement un rayonnement lumineux sensiblement de couleur rouge (R) et bleue (B), et dont les deux autres pixels diagonalement opposés captent un rayonnement lumineux sensiblement de couleur verte (G). La surface en vue de dessus d'un pixel Z correspond sensiblement à la somme des surfaces en vue de dessus de quatre pixels 2D.

La figure 11 est une vue de dessus schématique représentant un autre exemple d'agencement de pixels 2D pour l'acquisition d'une image 2D en couleur et de pixels Z du dispositif d'acquisition d'images 12 de la figure 9. Les pixels 2D sont agencés selon une matrice de Bayer à la différence qu'un pixel 2D captant un rayonnement lumineux sensiblement de couleur verte (G) est remplacé par un pixel Z. Les dimensions d'un pixel Z correspondent sensiblement aux dimensions d'un pixel 2D.

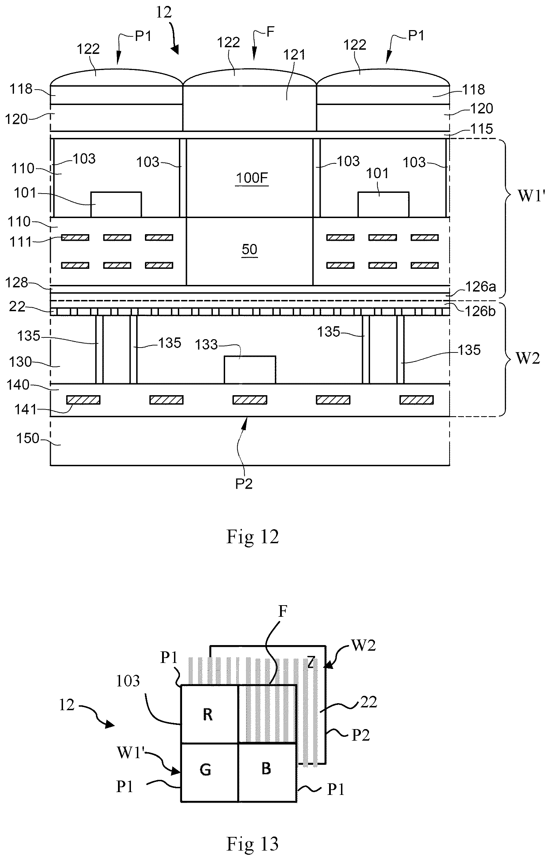

La figure 12 est une vue en coupe illustrant de façon schématique et partielle un autre mode de réalisation d'un dispositif d'acquisition 12 comprenant des pixels Z et des pixels 2D.

Le dispositif 12 de la figure 12 comprend :

- un premier capteur W1' comprenant une pluralité de pixels P1 correspondant à des pixels 2D et une pluralité de fenêtres F répartis sur la surface du capteur, les éléments communs entre le premier capteur W1' et le capteur W1 représenté en figure 9 étant indiqués par les mêmes références ; et
- un deuxième capteur W2 formé dans et sur un deuxième substrat semiconducteur 130, par exemple un substrat en silicium monocristallin, le capteur W2 étant accolé à la face arrière du capteur W1' et comprenant une pluralité de pixels P2 correspondant à des pixels Z et disposés respectivement en regard des fenêtres F du capteur W1'.

Les fenêtres F du capteur W1' sont transmissives dans la gamme d'émission des sources lumineuses 16 et 20 de façon à permettre la détection du signal lumineux retour par les pixels P2 du capteur W2. A titre d'exemple, le coefficient de transmission des fenêtres F du capteur W1' dans la gamme de longueurs d'ondes d'émission des sources lumineuses 16 et 20 est supérieur à 50 %.

Le signal lumineux retour réfléchi par la scène est capté par les pixels P2 du capteur W2, de façon à déterminer le degré de polarisation estimé DOP' en différents points de la scène. Les pixels P1 du capteur W1' sont quant à eux aptes à capter de la lumière visible émise par la scène pour former une image 2D de la scène. Les fenêtres F du capteur W1' sont transmissives dans la gamme d'émission de la source lumineuse de façon à permettre la détection du signal lumineux retour par les pixels de profondeur P2 du capteur W2. A titre d'exemple, le coefficient de transmission des fenêtres F du capteur W1' dans la gamme de longueurs d'ondes d'émission de la source lumineuse est supérieur à 50 %.

Dans l'exemple représenté, chaque pixel P1 du capteur W1' comprend une photodiode 101 comprenant une ou plusieurs régions implantées localisées formées dans le substrat semiconducteur 100. Dans cet exemple, la ou les régions implantées de la photodiode 101 sont disposées du côté de la face arrière du substrat 100. Chaque pixel P1 peut en outre comprendre un ou plusieurs composants supplémentaires (non représentés), par exemple des transistors de contrôle, formés du côté de la face arrière du substrat 100, par exemple dans le substrat 100 et sur la face arrière du substrat 100. Le capteur W1' comprend en outre un empilement d'interconnexion 110, constitué de couches diélectriques et conductrices alternées revêtant la face arrière du substrat 100, dans lequel sont formées des pistes et/ou bornes de connexion électrique 111 connectant les pixels P1 du capteur à un circuit périphérique de commande et d'alimentation, non représenté.

Dans l'exemple représenté, le capteur W1' comprend des murs d'isolation verticaux 103 traversant le substrat 100 sur toute son épaisseur et délimitant des portions 100F de substrat correspondant respectivement aux différentes fenêtres F du capteur W1'. Les murs d'isolation verticaux 103 ont notamment une fonction d'isolation optique, et peuvent en outre avoir une fonction d'isolation électrique. A titre d'exemple, les murs d'isolation verticaux 103 sont en un matériau diélectrique, par exemple de l'oxyde de silicium. Des murs d'isolation similaires peuvent en outre être prévus entre les pixels P1 du capteur W1'.

Dans l'exemple représenté, le substrat 100 du capteur W1' ne comprend pas de région implantée localisée dans les portions de substrat 100F des fenêtres F du capteur W1', de façon à maximiser la transparence du substrat dans les fenêtres F.

Selon un aspect du mode de réalisation de la figure 12, chaque fenêtre transmissive F comprend en outre, du côté de la face arrière du substrat 130, une région en silicium amorphe 50 située en vis-à-vis de la portion de substrat 100F de la fenêtre F. La région 50 est en contact, par sa face avant, avec la face arrière de la portion de substrat 100F, et s'étend sur sensiblement toute la surface de la fenêtre F. Dans cet exemple, l'empilement d'interconnexion 110 est interrompu en vis-à-vis de chaque fenêtre transmissive F. La région de silicium amorphe 50 est située dans la zone d'interruption de l'empilement d'interconnexion 110. La région de silicium amorphe 50 s'étend par exemple sur sensiblement toute l'épaisseur de l'empilement d'interconnexion 110. L'épaisseur de la région de silicium amorphe 50 est par exemple sensiblement identique à celle de l'empilement d'interconnexion 110, par exemple comprise entre 3 et 15 $\mu$m, par exemple entre 5 et 10 $\mu$m.

De préférence, la région de silicium amorphe 50 est en contact, sur toute sa périphérie et sur sensiblement toute sa hauteur, avec un matériau d'indice de réfraction plus faible que celui du silicium amorphe, par exemple de l'oxyde de silicium. Ainsi, la lumière en provenance de la portion de substrat 100F de la fenêtre F est guidée verticalement vers le pixel P2 sous-jacent.

Chaque fenêtre F a par exemple, en vue de dessus, des dimensions sensiblement identiques aux dimensions des pixels P1 du capteur W1'. A titre d'exemple, en vue de dessus, la plus grande dimension de chaque pixel P1 ou fenêtre F du capteur W1' est inférieure à 10 $\mu$m, par exemple inférieure à 5 $\mu$m, par exemple inférieure à 2 $\mu$m, par exemple de l'ordre de 1 $\mu$m.

Dans l'exemple représenté, la face avant du substrat 100 est revêtue d'une couche de passivation 115, par exemple une couche d'oxyde de silicium, une couche de HfO$_2$, une couche d'Al$_2$O$_3$, ou un empilement de plusieurs couches de matériaux différents pouvant avoir d'autres fonctions que la seule fonction de passivation (antireflet, filtrage, collage, etc.), s'étendant sur sensiblement toute la surface du capteur. A titre d'exemple, la couche 115 est disposée sur et en contact avec la face avant du substrat 100.

Dans l'exemple de la figure 12, le capteur W1' est un capteur d'image 2D couleur, c'est-à-dire qu'il comprend des pixels P1 de différents types, adaptés à mesurer des intensités lumineuses dans des gammes de longueurs d'ondes visibles distinctes. Pour cela, chaque pixel P1 comprend un filtre couleur 118, par exemple une couche de résine colorée, disposé du côté de la face avant du substrat 100. A titre d'exemple, le capteur W1' comprend trois types de pixels P1, des premiers pixels P1 appelés pixels bleus, comprenant un filtre couleur 118 transmettant préférentiellement de la lumière bleue, des deuxièmes pixels P1 appelés pixels rouges, comprenant un filtre couleur 118 transmettant préférentiellement de la lumière rouge, et des troisièmes pixels P1 appelés pixels verts, comprenant un filtre couleur 118 transmettant préférentiellement de la lumière verte. Sur la figure 1, les différents types de pixels P1 ne sont pas différenciés.

Dans l'exemple de la figure 12, chaque pixel P1 comprend en outre un filtre coupe-bande infrarouge 120, par exemple un filtre interférentiel ou une couche de résine laissant passer le visible et absorbant le rayonnement infrarouge. Le filtre 120 est par exemple adapté à transmettre la lumière à toutes les longueurs d'ondes à l'exception d'une gamme de longueurs d'ondes centrée sur la gamme de longueurs d'ondes d'émission de la source lumineuse. Dans cet exemple, le filtre 120 est disposé du côté de la face avant du substrat 100, par exemple sur et en contact avec la face avant de la couche de passivation 115, et s'étend sur sensiblement toute la surface de chaque pixel P1. Le filtre couleur 118 est par exemple disposé sur et en contact avec la face avant du filtre 120. Le filtre 120 permet d'éviter que la lumière en provenance de la source lumineuse et réfléchie par la scène ne soit détectée par les pixels P1 et ne viennent dégrader la qualité de l'image 2D acquise par les pixels P1. Le filtre 120 permet plus généralement de bloquer les rayonnements infrarouge pour améliorer le rendu des couleurs de l'image 2D.

A titre de variante, le capteur W1' peut être un capteur d'image 2D monochromatique, auquel cas les filtres 118 peuvent être omis.

Dans l'exemple représenté, chaque fenêtre F du capteur W1' comprend un filtre 121, par exemple un filtre en résine et/ou un filtre interférentiel, adapté à transmettre la lumière dans la gamme de longueurs d'ondes d'émission de la source lumineuse. De préférence, le filtre 121 est adapté à transmettre la lumière uniquement dans une bande de longueurs d'ondes relativement étroite centrée sur la gamme de longueurs d'ondes d'émission de la source lumineuse du système, par exemple une gamme de longueurs d'ondes de largeur à mi-hauteur inférieure à 30 nm, par exemple inférieure à 20 nm, par exemple inférieure à 10 nm. Dans cet exemple, le filtre 121 est disposé du côté de la face avant du substrat 100, par exemple sur et en contact avec la face avant de la couche de passivation 115, et s'étend sur sensiblement toute la surface de la fenêtre F. Le filtre 121 permet d'éviter des déclenchements indésirables de la photodiode du pixel P2 sous-jacent sous l'effet d'un rayonnement lumineux ne provenant pas de la source lumineuse du système. Dans l'exemple de la figure 1, le filtre 121 est localisé au niveau des seules fenêtres F du capteur.

Chaque pixel P1 du capteur W1' peut en outre comprendre une microlentille 122 disposée du côté de la face avant du substrat 100, par exemple sur et en contact avec le filtre couleur 118 du pixel, adaptée à focaliser la lumière incidente sur la photodiode 101 du pixel.

De plus, chaque fenêtre F du capteur W1' peut comprendre une microlentille 122, disposée du côté de la face avant du substrat 100, par exemple sur et en contact avec le filtre 120 de la fenêtre.

Dans cet exemple, la face arrière du capteur W1' est collée à la face avant du capteur W2 par collage moléculaire. Pour cela, le capteur W1' comprend une couche 126a, par exemple en oxyde de silicium, revêtant sa face arrière. De plus, le capteur W2 comprend une couche 126b de même nature que la couche 126a, par exemple en oxyde de silicium, revêtant sa face avant. La face arrière de la couche 126a est mise en contact avec la face avant de la couche 126b de façon à réaliser un collage moléculaire du capteur W2 au capteur W1'. A titre d'exemple, la couche 126a, respectivement 126b, s'étend de façon continue sur sensiblement toute la surface du capteur W1', respectivement W2.

Dans l'exemple représenté, le capteur W1' comprend en outre, du côté de sa face arrière, entre l'empilement d'interconnexion 110 et la couche 126a, une couche 128 d'un matériau d'indice de réfraction différent de celui des couches 126a et 126b, par exemple un matériau d'indice de réfraction supérieur à celui des couches 126a et 126b, par exemple du nitrure de silicium. A titre d'exemple, la couche 128 s'étend de façon continue sur sensiblement toute la surface du capteur W1'. La couche 126a est par exemple en contact, par sa face avant, avec la face arrière de la couche 128.

De plus, dans cet exemple, le dispositif 12 comprend en outre, du côté de la face avant du capteur W2, entre le substrat 130 et la couche 126b, le polariseur rectiligne 22. A titre d'exemple, le polariseur rectiligne 22 s'étend de façon continue sur sensiblement toute la surface du capteur W2.

Dans cet exemple, l'empilement des couches 128-126a-126b forme un empilement antireflet favorisant le passage de la lumière de chaque fenêtre transmissive F du capteur W1' vers la région photosensible du pixel P2 sous-jacent.

Chaque pixel P2 du capteur W2 comprend une photodiode 133 formée dans le substrat 130, en vis-à-vis de la fenêtre F correspondante du capteur W1'. La photodiode 133 comprend une ou plusieurs régions semiconductrices localisées formées dans le substrat semiconducteur 130. Chaque pixel P2 peut en outre comprendre un ou plusieurs composants supplémentaires (non représentés), par exemple des transistors de contrôle, formés du côté de la face arrière du substrat 130, par exemple dans le substrat 130 et sur la face arrière du substrat 130. Le capteur W2 comprend en outre un empilement d'interconnexion 140, constitué de couches diélectriques et conductrices alternées revêtant la face arrière du substrat 130, dans lequel sont formées des pistes et/ou bornes de connexion électrique 141 connectant les pixels P2 du capteur à un circuit périphérique de commande et d'alimentation, non représenté.

Dans l'exemple représenté, dans chaque pixel P2 du capteur W2, la photodiode 133 du pixel est entièrement entourée par un mur d'isolation vertical 135 traversant le substrat 130 sur toute son épaisseur. Le mur 135 a notamment une fonction d'isolation optique, et peut en outre avoir une fonction d'isolation électrique. A titre d'exemple, le mur d'isolation vertical 135 est en un matériau diélectrique, par exemple de l'oxyde de silicium. A titre de variante, le mur d'isolation vertical 135 est un mur multicouche comprenant une couche intérieure en un matériau diélectrique, par exemple de l'oxyde de silicium, une ou plusieurs couches intermédiaires comprenant au moins une couche métallique, et une couche extérieure en un matériau diélectrique, par exemple de l'oxyde de silicium.

Dans l'exemple représenté, les dimensions latérales des zones de détection des pixels P2 (délimitées par les murs 135) sont supérieures aux dimensions latérales des fenêtres transmissives F, ce qui permet de relâcher les contraintes d'alignement lors de l'assemblage des capteurs W1' et W2. Les modes de réalisation décrits ne se limitent toutefois pas à ce cas particulier. A titre de variante, les dimensions latérales des régions photosensibles des zones de détection des pixels P2 sont sensiblement identiques à celles des fenêtres transmissives F. Dans ce cas, le mur d'isolation vertical 135 peut être situé sensiblement à l'aplomb du mur d'isolation vertical 103 entourant la portion de substrat 100 de la fenêtre F correspondante du capteur W1'.

Les murs 103 et 135, ainsi que le guidage vertical à travers la région de silicium amorphe 50, permettent de limiter le risque que des rayons lumineux reçus par un pixel P1 voisin de la fenêtre F ne viennent activer la photodiode SPAD du pixel P2 correspondant, ce qui pourrait conduire à une mesure de profondeur erronée.

L'épaisseur du substrat 130 est par exemple comprise entre 5 et 50 $\mu$m, par exemple entre 8 et 20 $\mu$m.

Dans l'exemple représenté, le capteur W2 est fixé, par sa face arrière, sur un substrat de support 150, par exemple un substrat en silicium. A titre de variante, le substrat de support peut être remplacé par un circuit supplémentaire de contrôle et de traitement (non représenté) formé dans et sur un troisième substrat semiconducteur, par exemple tel que décrit en relation avec la figure 1 de la demande de brevet EP3503192 susmentionnée.

La figure 13 est une vue de dessus schématique représentant un exemple d'agencement de pixels 2D du capteur W1' pour l'acquisition d'une image 2D en couleur et de pixels Z du capteur W2 du dispositif d'acquisition d'images 12 représenté en figure 12. Les pixels 2D sont agencés selon une matrice de Bayer à la différence qu'un pixel 2D captant un rayonnement lumineux sensiblement de couleur verte (G) n'est pas présent et est remplacé par la fenêtre F.

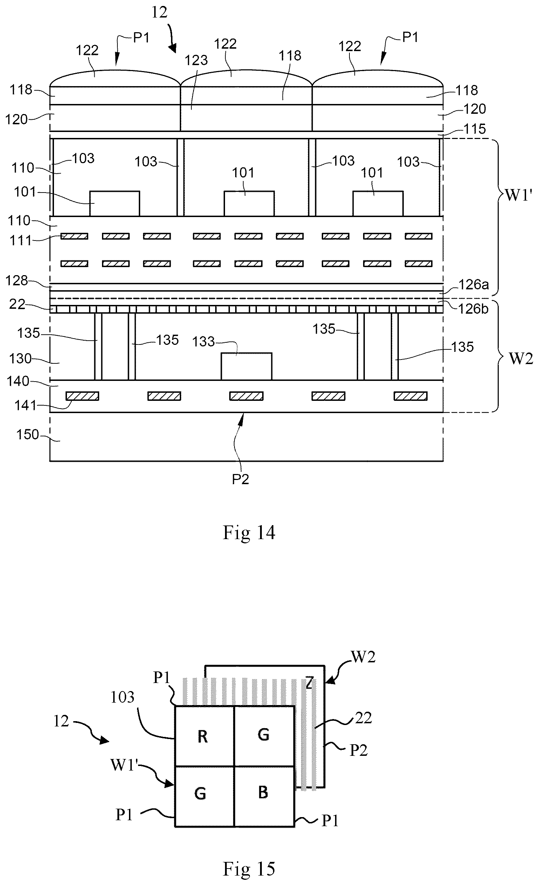

La figure 14 est une vue en coupe illustrant de façon schématique et partielle un autre mode de réalisation d'un dispositif d'acquisition 12 comprenant des pixels Z et des pixels 2D. Le dispositif d'acquisition 12 représenté en figure 14 comprend l'ensemble des éléments du dispositif d'acquisition 12 représenté en figure 12 à la différence que les fenêtres F ne sont pas présentes et sont remplacées chacune par un pixel P1 recouvert d'un bloc 123 et du filtre couleur 118. Le bloc 123 est transparent au rayonnement émis par les sources lumineuses 16 et 20 et est transparent à la lumière visible. A titre de variante, tous les filtres 120 sont remplacés chacun par le bloc 123.

La figure 15 est une vue de dessus schématique représentant un exemple d'agencement de pixels 2D du capteur W1' pour l'acquisition d'une image 2D en couleur et de pixels Z du capteur W2 du dispositif d'acquisition d'images 12 représenté en figure 14. Les pixels 2D sont agencés selon une matrice de Bayer.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. Bien que, dans les modes de réalisation décrits précédemment, la deuxième direction $\vec{y}$ est perpendiculaire à la première direction $\vec{x}$, la deuxième direction $\vec{y}$ peut être inclinée par rapport à la première direction $\vec{x}$ d'un angle différent de 90 °. En outre, bien que, dans les modes de réalisation décrits précédemment, la direction de polarisation du polariseur rectiligne 22 est parallèle à la direction $\vec{x}$, la direction de polarisation du polariseur rectiligne 22 peut être inclinée par rapport à la direction $\vec{x}$, tout en n'étant pas perpendiculaire à la direction $\vec{x}$. En effet, il suffit que l'angle d'inclinaison de la direction de polarisation du polariseur rectiligne 22 par rapport à la direction $\vec{x}$ soit connu, par le montage du système 10 ou par mesure, pour en tenir compte dans les relations utilisées pour la détermination du degré de polarisation estimé DOP'.

Enfin, la mise en oeuvre pratique des modes de réalisation et variantes décrits est à la portée de l'homme du métier à partir des indications fonctionnelles données ci-dessus.

**Revendications**

1. Système (10) de détermination d'un degré de polarisation estimé (DOP') d'un rayonnement réfléchi ($\vec{E}_r$) par une scène (Sc), comprenant :

   - une première source lumineuse (16) d'un premier rayonnement électromagnétique ( $\vec{E}_y^{(f\alpha)}$ ) modulé à une première fréquence et polarisé de façon rectiligne selon une première direction ;

   - une deuxième source lumineuse (20) d'un deuxième rayonnement électromagnétique ( $\vec{E}_x^{(f\beta)}$ ) modulé à une deuxième fréquence supérieure strictement à la première fréquence et polarisé de façon rectiligne selon une deuxième direction non parallèle à la première direction, la deuxième fréquence étant un multiple de la première fréquence ; et
   - un dispositif d'acquisition (12) d'une image du rayonnement réfléchi par la scène comprenant des premiers pixels (P1, P2) configurés pour capter le rayonnement réfléchi, chaque premier pixel étant recouvert d'un polariseur rectiligne (22) selon une troisième direction non perpendiculaire à la première direction.

2. Système selon la revendication 1, dans lequel la troisième direction est identique à la première direction.

3. Système selon la revendication 1 ou 2, dans lequel la deuxième fréquence est le double de la première fréquence.

4. Système selon l'une quelconque des revendications 1 à 3, dans lequel la première fréquence est dans la plage de 25 MHz à 100 MHz.

5. Système selon l'une quelconque des revendications 1 à 4, dans lequel la deuxième direction est perpendiculaire à la première direction.

6. Système selon l'une quelconque des revendications 1 à 5, dans lequel le dispositif d'acquisition (12) ne comprend pas d'autres polariseurs rectilignes que les polariseurs rectilignes (22) selon la troisième direction.

7. Système selon l'une quelconque des revendications 1 à 6, dans lequel le dispositif d'acquisition (12) est en outre configuré pour fournir une image de profondeur de la scène (Sc).

8. Système selon l'une quelconque des revendications 1 à 7, dans lequel le dispositif d'acquisition (12) est en outre configuré pour l'acquisition d'une image 2D de la scène (Sc) et comprend des deuxièmes pixels (P1) d'image 2D.

9. Système selon la revendication 8, dans lequel le dispositif d'acquisition (12) comprend un empilement d'un premier capteur (W1') comprenant les deuxièmes pixels (P1) et d'un deuxième capteur (W2) comprenant les premiers pixels (P2).

10. Procédé de détermination d'un degré de polarisation estimé (DOP') d'un rayonnement réfléchi ($\vec{E}_r$) par une scène (Sc), comprenant les étapes suivantes :

    - émission par une première source lumineuse (16) d'un premier rayonnement électromagnétique ( $\vec{E}_y^{(f\alpha)}$ ) modulé à une première fréquence et polarisé de façon rectiligne selon une première direction ;

    - émission par une deuxième source lumineuse (20) d'un deuxième rayonnement électromagnétique ( $\vec{E}_x^{(f\beta)}$ ) modulé à une deuxième fréquence supérieure strictement à la première fréquence et polarisé de façon rectiligne selon une deuxième direction non parallèle à la première direction, la deuxième fréquence étant un multiple de la première fréquence ; et
- acquisition par un dispositif d'acquisition (12) d'une image du rayonnement réfléchi par la scène, le dispositif d'acquisition comprenant des premiers pixels (P1, P2) configurés pour capter le rayonnement réfléchi, chaque premier pixel étant recouvert d'un polariseur rectiligne (22) selon la première direction.

11. Procédé selon la revendication 10, dans lequel la deuxième fréquence est égale au double de la première fréquence, le procédé comprenant en outre les étapes suivantes :

- l'acquisition par les premiers pixels (P1, P2) de $N_{tap}$ échantillons $I_k$ de charges photogénérées par détection du rayonnement réfléchi ($\vec{E}_r$) pendant des durées $T_{int}$ décalées, $N_{tap}$ étant un nombre entier supérieur ou égal à cinq ;
- la détermination de coefficients $a_n$ et $b_n$, n étant un nombre entier variant de 1 à 2, selon les relations suivantes :

[Math 24]

$$\begin{cases} a_n = \dfrac{2}{N_{tap}} \dfrac{1}{\text{sinc}\left(\frac{1}{2}n\omega\, T_{int}\right)} \sum_{k=0}^{N_{tap}-1} I_k \, \cos\left(n\omega k T_e\right) \\[3mm] b_n = \dfrac{2}{N_{tap}} \dfrac{1}{\text{sinc}\left(\frac{1}{2}n\omega T_{int}\right)} \sum_{k=0}^{N_{tap}-1} I_k \, \sin\left(n\omega k T_e\right) \end{cases}$$

où $\omega$ est la pulsation associée à la première fréquence et où Te est la durée séparant les débuts d'acquisitions de deux échantillons successifs ;
- la détermination de coefficients $c_n$ selon la relation suivante :

[Math 25]

$$c_n = \sqrt{a_n^2 + b_n^2}$$

- la détermination du degré de polarisation estimé DOP' selon la relation suivante :

[Math 26]

$$DOP' = \frac{c_1 - c_2}{c_1 + c_2}$$

**Patentansprüche**

1. System (10) zum Bestimmen eines geschätzten Polarisationsgrades (DOP') einer Strahlung ($\vec{E}_r$), die von einer Szene (Sc) reflektiert wird, das Folgendes aufweist:

- eine erste Lichtquelle (16) einer ersten elektromagnetischen Strahlung ( $\vec{E}_y^{(f\alpha)}$ ), die bei einer ersten Frequenz moduliert ist und nach einer ersten Richtung geradlinig polarisiert ist;

- eine zweite Lichtquelle (20) einer zweiten elektromagnetischen Strahlung ( $\vec{E}_x^{(f\beta)}$ ), die bei einer zweiten Frequenz moduliert ist, die größer als die erste Frequenz ist, und nach einer zweiten Richtung geradlinig polarisiert ist, die nicht-parallel zu der ersten Richtung ist, wobei die zweite Frequenz ein Vielfaches der ersten Frequenz ist; und
- eine Einrichtung zum Erfassen (12) eines Bildes der Strahlung, die von der Szene reflektiert wird, wobei die Einrichtung erste Pixel (P1, P2) aufweist, die eingerichtet zum Erfassen der reflektierten Strahlung sind, wobei jedes erste Pixel mit einem linearen Polarisator (22) nach einer dritten Richtung bedeckt ist, die nicht-senkrecht zu der ersten Richtung ist.

2. System nach Anspruch 1, wobei die dritte Richtung identisch zu der ersten Richtung ist.

3. System nach Anspruch 1 oder 2, wobei die zweite Frequenz zweimal die erste Frequenz ist.

4. System nach einem der Ansprüche 1 bis 3, wobei die erste Frequenz im Bereich von 25 MHz bis 100 MHz liegt.

5. System nach einem der Ansprüche 1 bis 4, wobei die zweite Richtung senkrecht zu der ersten Richtung ist.

6. System nach einem der Ansprüche 1 bis 5, wobei die Erfassungs-Einrichtung (12) keine anderen geradlinigen Polarisatoren aufweist als die geradlinigen Polarisatoren (22) nach der dritten Richtung.

7. System nach einem der Ansprüche 1 bis 6, wobei die Erfassungs-Einrichtung (12) ferner eingerichtet zum Liefern eines Tiefenbildes der Szene (Sc) ist.

8. System nach einem der Ansprüche 1 bis 7, wobei die Erfassungs-Einrichtung (12) ferner eingerichtet zum Erfassen eines 2D-Bildes der Szene (Sc) ist und zweite 2D-Bild-Pixel (P1) aufweist.

9. System nach Anspruch 8, wobei die Erfassungs-Einrichtung (12) einen Stapel eines ersten Sensors (W1') aufweist, der die zweiten Pixel (P1) aufweist, und eines zweiten Sensors (W2), der die ersten Pixel (P2) aufweist.

10. Verfahren zum Bestimmen eines geschätzten Polarisationsgrades (DOP') einer Strahlung ($\vec{E}_r$), die von einer Szene (Sc) reflektiert wird, das die folgenden Schritte aufweist:

   - Emission durch eine erste Lichtquelle (16) einer ersten elektromagnetischen Strahlung ( $\vec{E}_y^{(f\alpha)}$ ) , die bei einer ersten Frequenz moduliert ist und nach einer ersten Richtung geradlinig polarisiert ist;

   - Emission durch eine zweite Lichtquelle (20) einer zweiten elektromagnetischen Strahlung ( $\vec{E}_x^{(f\beta)}$ ) , die bei einer zweiten Frequenz moduliert ist, die größer als die erste Frequenz ist, und nach einer zweiten Richtung geradlinig polarisiert ist, die nicht-parallel zu der ersten Richtung ist, wobei die zweite Frequenz ein Vielfaches der ersten Frequenz ist; und
   - Erfassung durch eine Erfassungs-Einrichtung (12) eines Bildes der Strahlung, die von der Szene reflektiert wird, wobei die Erfassungs-Einrichtung erste Pixel (P1, P2) aufweist, die eingerichtet zum Erfassen der reflektierten Strahlung sind, wobei jedes erste Pixel mit einem geradlinigen Polarisator (22) nach der ersten Richtung bedeckt ist.

11. Verfahren nach Anspruch 10, wobei die zweite Frequenz gleich zweimal der ersten Frequenz ist, wobei das Verfahren ferner die folgenden Schritte aufweist:

   - das Erfassen durch die ersten Pixel (P1, P2) von $N_{tap}$ Proben $I_k$ von Ladungen, die durch Detektion der reflektierten Strahlung ($\vec{E}_r$) während verschobener Zeiträume $T_{int}$ photogeneriert werden, wobei $N_{tap}$ eine ganze Zahl größer als oder gleich fünf ist;
   - das Bestimmen von Koeffizienten $a_n$ und $b_n$, wobei n eine ganze Zahl ist, die von 1 bis 2 variiert, gemäß den folgenden Beziehungen:

[Math 24]

$$\begin{cases} a_n = \dfrac{2}{N_{tap}} \dfrac{1}{\mathrm{sinc}\left(\frac{1}{2} n\omega\, T_{int}\right)} \sum_{k=0}^{N_{tap}-1} I_k\ \cos\left(n\omega k T_e\right) \\[2em] b_n = \dfrac{2}{N_{tap}} \dfrac{1}{\mathrm{sinc}\left(\frac{1}{2} n\omega T_{int}\right)} \sum_{k=0}^{N_{tap}-1} I_k\ \sin\left(n\omega k T_e\right) \end{cases}$$

wobei ω der Impuls ist, der mit der ersten Frequenz assoziiert ist, und wobei $T_e$ der Zeitraum ist, der die Anfänge von Erfassungen von zwei aufeinanderfolgenden Proben trennt;
- das Bestimmen von Koeffizienten $c_n$ gemäß der folgenden Beziehung:

[Math 25]

$$c_n = \sqrt{a_n^2 + b_n^2}$$

- das Bestimmen des geschätzten Polarisationsgrades DOP' gemäß der folgenden Beziehung:

[Math 26]

$$\mathrm{DOP}' = \frac{c_1 - c_2}{c_1 + c_2}$$

**Claims**

1. System (10) for determining an estimated degree of polarization (DOP') of a radiation reflected ($\vec{E}_r$) by a scene (Sc), comprising:

   - a first light source (16) of a first electromagnetic radiation ( $\vec{E}_y^{(f\alpha)}$ ) modulated at a first frequency and rectilinearly polarized according to a first direction;

   - a second light source (20) of a second electromagnetic radiation ( $\vec{E}_x^{(f\beta)}$ ) modulated at a second frequency greater than the first frequency and rectilinearly polarized according to a second direction non-parallel to the first direction, the second frequency being a multiple of the first frequency; and
   - a device of acquisition (12) of an image of the radiation reflected by the scene comprising first pixels (P1, P2) configured to capture the reflected radiation, each first pixel being covered with a linear polarizer (22) according to a third direction non-perpendicular to the first direction.

2. System according to claim 1, wherein the third direction is identical to the first direction.

3. System according to claim 1 or 2, wherein the second frequency is twice the first frequency.

4. System according to any of claims 1 to 3, wherein the first frequency is the range from 25 MHz to 100 MHz.

5. System according to any of claims 1 to 4, wherein the second direction is perpendicular to the first direction.

6. System according to any of claims 1 to 5, wherein the acquisition device (12) comprises no other rectilinear polarizers than the rectilinear polarizers (22) according to the third direction.

7. System according to any of claims 1 to 6, wherein the acquisition device (12) is further configured to deliver a depth image of the scene (Sc).

8. System according to any of claims 1 to 7, wherein the acquisition device (12) is further configured for the acquisition of a 2D image of the scene (Sc) and comprises second 2D image pixels (P1).

9. System according to claim 8, wherein the acquisition device (12) comprises a stack of a first sensor (W1') comprising the second pixels (P1) and of a second sensor (W2) comprising the first pixels (P2).

10. Method of determining an estimated degree of polarization (DOP') of a radiation reflected ($\vec{E}_r$) by a scene (Sc), comprising the following steps:

   - emission by a first light source (16) of a first electromagnetic radiation ( $\vec{E}_y^{(f\alpha)}$ ) modulated at a first frequency and rectilinearly polarized according to a first direction;

- emission by a second light source (20) of a second electromagnetic radiation ( $\vec{E}_x^{(f\beta)}$ ) modulated at a second frequency greater than the first frequency and rectilinearly polarized according to a second direction non-parallel to the first direction, the second frequency being a multiple of the first frequency; and
- acquisition by an acquisition device (12) of an image of the radiation reflected by the scene, the acquisition device comprising first pixels (P1, P2) configured to capture the reflected radiation, each first pixel being covered with a rectilinear polarizer (22) according to the first direction.

11. Method according to claim 10, wherein the second frequency is equal to twice the first frequency, the method further comprising the following steps:

- the acquisition by the first pixels (P1, P2) of $N_{tap}$ samples $I_k$ of charges photogenerated by detection of the reflected radiation ($\vec{E}_r$) during shifted time periods $T_{int}$, $N_{tap}$ being an integer number greater than or equal to five;
- the determination of coefficients $a_n$ and $b_n$, n being an integer number varying from 1 to 2, according to the following relations:

[Math 24]

$$\begin{cases} a_n = \dfrac{2}{N_{tap}} \dfrac{1}{\mathrm{sinc}\left(\frac{1}{2} n\omega\, T_{int}\right)} \displaystyle\sum_{k=0}^{N_{tap}-1} I_k \,\cos\left(n\omega k T_e\right) \\[4mm] b_n = \dfrac{2}{N_{tap}} \dfrac{1}{\mathrm{sinc}\left(\frac{1}{2} n\omega T_{int}\right)} \displaystyle\sum_{k=0}^{N_{tap}-1} I_k \,\sin\left(n\omega k T_e\right) \end{cases}$$

where $\omega$ is the pulse associated with the first frequency and where Te is the time period separating the beginnings of acquisitions of two successive samples;
- the determination of coefficients $c_n$ according to the following relation:

[Math 25]

$$c_n = \sqrt{a_n^2 + b_n^2}$$

- the determination of the estimated degree of polarization DOP' according to the following relation:

[Math 26]

$$DOP' = \frac{c_1 - c_2}{c_1 + c_2}$$

10

18

20

$\vec{E}_x^{(f\beta)}$

CLK

28

16

$\vec{E}_y^{(f\alpha)}$

$\vec{E}_i$

14

$\vec{E}_r$

Sc

W1

30

22  26

12

24

Fig 1

$I_{ph}$

$T_{signal}$

32

$T_e$

$T_{int}$

$I_0$        $I_1$        $I_2$        $I_3$        $I_4$        $I_5$

$T_e$        $2T_e$        $3T_e$        $4T_e$        $5T_e$        t

Fig 2

DOP

Fig 3

DOP

Fig 4

DOP'

Fig 5

Fig 6

Fig 7

Fig 8

Fig 9

Fig 10

Fig 11

Fig 12

Fig 13

Fig 14

Fig 15

**EP 4 296 650 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2206124
- US 7339670 B2

- EP 3503192 A

**Littérature non-brevet citée dans la description**

- **R. LANGE** ; **P. SEITZ**. Solid-state TOF range camera. *IEE J. on Quantum Electronics*, March 2001, vol. 37 (3)